(19)

Europäisches
Patentamt
European
Patent Office
Office européen
des brevets

(11)  **EP 1 897 712 B1**

(12)  **EUROPEAN PATENT SPECIFICATION**

(45) Date of publication and mention
of the grant of the patent:
**28.10.2009 Bulletin 2009/44**

(51) Int Cl.:
***B60H 1/32*** *(2006.01)*

(21) Application number: **07017414.9**

(22) Date of filing: **05.09.2007**

(54) **Air-conditioning system for vehicle**

Klimaanlagensystem für ein Fahrzeug

Système de climatisation pour véhicule

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **07.09.2006 JP 2006242696**

(43) Date of publication of application:
**12.03.2008 Bulletin 2008/11**

(73) Proprietor: **Sanden Corporation
Isesaki-shi,
Gunma 372-8502 (JP)**

(72) Inventor: **Imai, Tomonori
Isesaki-shi,
Gunma 372-8502 (JP)**

(74) Representative: **Feldmeier, Jürgen et al
Prüfer & Partner GbR
Patentanwälte
Sohnckestrasse 12
81479 München (DE)**

(56) References cited:
**EP-A- 0 266 208      EP-A- 1 437 244
EP-A- 1 623 861      US-A- 4 877 081
US-A- 4 928 499**

**Description**

**BACKGROUND OF THE INVENTION**

Field of the Invention

This invention relates to an air-conditioning system for a vehicle, specifically, an air-conditioning system comprising a variable capacity compressor.

Description of the Related Art

A variable capacity compressor provided in an air-conditioning system for a vehicle can regulate the cooling performance of the air-conditioning system, or in other words, the cooling performance of the refrigeration circuit thereof by its refrigerant discharge capacity being varied. Specifically, under the conditions such that the thermal load in a passenger compartment of the vehicle is high, as in summer, the compressor is driven to operate with a maximum refrigerant discharge capacity. This causes a drop in the temperature of conditioned air blown out into the compartment so that the compartment temperature is regulated to a level comfortable to the vehicle occupant.

When the compressor is driven to operate with the maximum refrigerant discharge capacity during acceleration of the vehicle, however, the drive power consumed by the compressor greatly increases with an increase in rotation speed of an engine equipped with the vehicle, which causes a great decrease in the acceleration performance of the vehicle. In this connection, there has been already developed a technique of decreasing the drive power supplied to the compressor when an acceleration of the vehicle is detected (see the Patent document: Japanese Unexamined Patent Publication No. Sho 57-175422, for example). In this technique, the part of engine output corresponding to the decrease in drive power supplied to the compressor is allocated for vehicle traveling, so that the acceleration performance of the vehicle is ensured.

When the drive power supplied to the compressor is unconditionally decreased during vehicle acceleration, the conditioned-air temperature however rises so that the compartment temperature cannot be maintained at a level comfortable to the vehicle occupant.

Thus, there is observed a trade-off between maintaining the comfortable compartment temperature and ensuring the vehicle acceleration performance.

Such trade-off problem may be solved by decreasing the drive power supplied to the compressor in a manner such that the conditioned-air temperature is kept within a desirable range so that the comfortable compartment temperature is maintained, during the vehicle acceleration. In order to achieve this, consideration needs to be given to the degree of acceleration demanded by the driver and the conditioned-air temperature, when the vehicle is accelerated.

The Patent Document, however, gives no consideration to this point. Thus, according to the Patent Document, for example even in a situation that the conditioned-air temperature is close to the upper limit of a set range for allowing the compartment temperature to be maintained when vehicle acceleration is started, the drive power supplied to the compressor is consistently decreased according to a demand for the vehicle acceleration. Consequently, the conditioned-air temperature rises, so that the compartment temperature rises above the set range, i.e., the comfortable compartment temperature cannot be maintained.

The Patent Documents EP-A-1 623 861, EP-A-0 266 208 and US-A-4 928 499 disclose a an air conditioning system for a vehicle, comprising a refrigeration circuit including a circulation path along which a refrigerant circulates, the refrigeration circuit having a variable capacity compressor, a condenser, an expansion mechanism and an evaporator disposed in the circulation path n this order. The system further comprises a degree detection device for detecting demanded vehicle acceleration degree, a temperature detection device for detecting temperature of the evaporator or temperature correlating with the temperature of the evaporator, at vehicle-acceleration start time, a selection device for selecting acceleration-period cooling performance of the refrigeration circuit on the basis of the demanded acceleration degree and the temperature detected, and an output device for generating a capacity control signal for determining an amount of the refrigerant discharged from the compressor, on the basis of the acceleration-period cooling performance selected, and outputting the capacity control signal to the compressor.

The primary object of the present invention is to provide an air-conditioning system for a vehicle that can ensure the vehicle acceleration performance and at the same time maintain the comfortable compartment temperature.

**SUMMARY OF THE INVENTION**

The above object is achieved by an air-conditioning system for a vehicle according to claim 1.

Further advantageous developments are the subject-matters of the dependent claims.

According to the air-conditioning system described above, in selecting the cooling performance of the refrigeration circuit to decrease the drive power supplied to the compressor during vehicle acceleration, the demanded acceleration degree and the temperature are taken into consideration. Thus, during the vehicle acceleration, the cooling performance selected does not arbitrarily decreased. This makes it possible to ensure the vehicle acceleration performance and at the same time maintain the comfortable compartment temperature of the vehicle.

The demanded acceleration degree can be obtained from the amount of accelerator depression given by the driver, for example. The temperature is the temperature of exit air, namely air after passing through the evaporator.

Preferably, the selection device should have control modes for controlling the acceleration-period cooling performance of the refrigeration circuit, where selection from the control modes is performed on the basis of a difference between pre-acceleration cooling performance of the refrigeration circuit at the acceleration start time and post-acceleration cooling performance of the refrigeration circuit estimated in consideration of vehicle acceleration. Specifically, the control modes can include a HOLD mode to be selected when the difference is within a specified range, that is, the difference is so small that it does not have a significant influence on the vehicle acceleration performance or the comfortable compartment temperature, for maintaining the acceleration-period cooling performance at the same level as the pre-acceleration cooling performance.

When the HOLD mode is selected, the acceleration-period cooling performance is maintained at the same level as the pre-acceleration cooling performance, so that the comfortable compartment temperature is maintained during the vehicle acceleration. Thus, the air-conditioning system has an improved reliability.

The control modes can include at least one of an UP mode and an DOWN mode to be selected when the difference is out of a specified range, that is, the difference is so great that it has a significant influence on the comfortable compartment temperature or the vehicle acceleration performance. The UP mode maintains the acceleration-period cooling performance at a higher level compared with the pre-acceleration cooling performance, and the DOWN mode contrarily maintains the acceleration-period cooling performance at a lower level compared with the pre-acceleration cooling performance.

When the UP mode is selected, the acceleration-period cooling performance is maintained at a higher level compared with the pre-acceleration cooling performance, so that the comfortable compartment temperature is maintained even during the vehicle acceleration. Meanwhile, when the DOWN mode is selected, the acceleration-period cooling performance is maintained at a lower level compared with the pre-acceleration cooling performance, so that a further increase in vehicle acceleration performance is achieved.

Preferably, the UP mode should be provided to cause the acceleration-period cooling performance to increase with an increase in the temperature detected, while the DOWN mode should be provided to cause the acceleration-period cooling performance to decrease with an increase in the demanded acceleration degree.

The selection device may be adapted to calculate an acceleration-period target temperature for the evaporator, on the basis of the demanded acceleration degree and the temperature detected, and set the acceleration-period cooling performance on the basis of this acceleration-period target temperature, where the acceleration-period target temperature should desirably be a target temperature for exit air, namely air after passing through the evaporator.

Alternatively, the selection device may be adapted to calculate an acceleration-period target pressure for the compressor, on the basis of the demanded acceleration degree and the temperature of exit air, and set the acceleration-period cooling performance on the basis of this acceleration-period target pressure, where the acceleration-period target pressure should desirably be a target intake pressure at which the compressor should suck in the refrigerant.

Whether the acceleration-period cooling performance is calculated on the basis of the target temperature for the evaporator or the target pressure for the compressor as mentioned above, the acceleration-period cooling performance calculated is such that makes it possible to ensure the vehicle acceleration performance and at the same time maintain the comfortable compartment temperature.

Further scope of applicability of the present invention will become apparent from the detailed description given hereinafter. However, it should be understood that the detailed description and specific examples, while indicating preferred embodiments of the invention, are given by way of illustration only, since various changes and modifications within the claims will become apparent to those skilled in the art from this detailed description.

## BRIEF DESCRIPTION OF THE DRAWINGS

The present invention will become more fully understood from the detailed description given hereinbelow and the accompanying drawings which are given by way of illustration only, and thus, are not limitative of the present invention, and wherein:

FIG. 1 schematically shows an embodiment of an air-conditioning system for a vehicle;
FIG. 2 is a control block diagram for an A/C ECU of FIG. 1;
FIG. 3 is a flow chart showing a control procedure executed by control blocks of FIG. 2;
FIG. 4 is a graph showing relation between threshold for determining vehicle acceleration and vehicle speed;

FIG. 5 is a diagram for explaining how to determine whether the vehicle is being accelerated or not, on the basis of accelerator depression;

FIG. 6 is a diagram for explaining how to select a control mode;

FIG. 7 is a graph showing relation between exit air temperature from an evaporator at the vehicle-acceleration start time and parameter α;

FIG. 8 is a graph showing relation between demanded vehicle-acceleration degree and parameter β;

FIG. 9 is a graph showing how HOLD, UP and DOWN modes for controlling acceleration-period cooling performance are distributed with respect to demanded acceleration degree and exit air temperature;

FIG. 10 is a graph showing a controllable region and an uncontrollable region for the compressor, defined depending on capacity control signal;

FIG. 11 is a graph for explaining how the system operates when the HOLD mode is selected;

FIG. 12 is a graph for explaining how the system operates when the UP mode or DOWN mode is selected;

FIGS. 13 to 16 are diagrams showing variants of control blocks of FIG. 2;

FIG. 17 is a graph showing relation between demanded acceleration degree and target intake pressure for the compressor;

FIG. 18 is a graph showing relation between exit air temperature and target intake pressure for the compressor;

FIG. 19 is a graph showing relation between demanded acceleration degree and target exit air temperature in acceleration-period of the vehicle; and

FIG. 20 is a graph showing relation between exit air temperature and target exit air temperature.

## DETAILED DESCRIPTION OF THE PREFERRED EMBODIMENTS

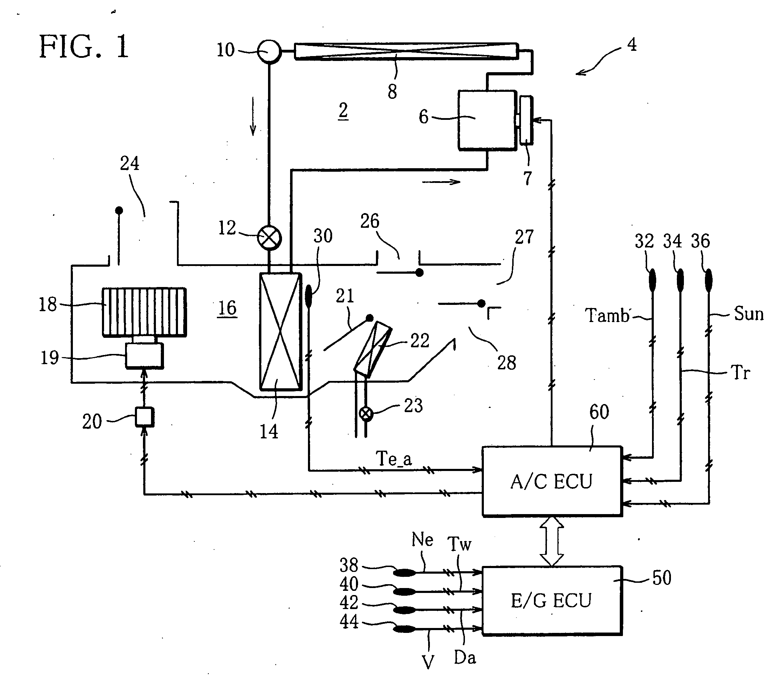

FIG. 1 schematically shows a part including an engine room 2. A vehicle is provided with an air-conditioning system, and this system comprises a refrigeration circuit 4. The refrigeration circuit 4 has a refrigerant circulation path, and by a refrigerant circulating along the circulation path, the temperature of the vehicle interior is regulated to within a range set as desired.

Specifically, in the circulation path, a variable capacity compressor 6, a condenser 8, a liquid receiver, also called simply a receiver 10, an expansion valve (expansion mechanism) 12 and an evaporator 14 are disposed in this order. The compressor 6, condenser 8, receiver 10 and expansion valve 12 are arranged in the engine room 2, while the evaporator 14 is located within a ventilation duct 16. The ventilation duct 16 is arranged behind the engine room 2.

In the present embodiment, the compressor 6 is driven by an engine (not shown) of the vehicle. Specifically, the compressor 6 includes an electromagnetic clutch 7, and the electromagnetic clutch 7 is disposed in a power transmission path for connecting the engine and the compressor 6. When a start switch (not shown) for the air-conditioning system is put in an ON position, the electromagnetic clutch 7 allows transmission of power from the engine to the compressor 6 so that the compressor 6 is driven.

Within the ventilation duct 16, a blower 18 is disposed upstream of the evaporator 14. The blower 18 is driven by a motor 19. Further, a heater unit 22 is disposed downstream of the evaporator 14. The heater unit 22 includes a water valve 23 and an air mixing damper 21. The air mixing damper 21 regulates the ratio between the flow quantity of air passing through the heater unit 22 and the flow quantity of air bypassing the heater unit 22.

When driven, the compressor 6 sucks in the refrigerant in the state of a dry vapor, from the evaporator 14 side, and compresses the sucked refrigerant and discharges it in the state of a high-temperature and high-pressure gas, toward the condenser 8. The refrigerant discharged is cooled and condensed into a liquid state within the condenser 8, and the liquid refrigerant is supplied from the condenser 8 to the receiver 10, at the same pressure, and stored in the receiver 10 temporarily.

Then, the high-pressure liquid refrigerant is delivered from the receiver 10 towards the expansion valve 12. When passing through the expansion valve 12, the liquid refrigerant expands, so that the refrigerant in the state of a wet vapor, namely a liquid and vapor mixture at low temperature and low pressure spurts out into the evaporator 14 and is evaporated within the evaporator 14.

At this time, the evaporation heat cools the air passing through the evaporator 14 by the heat exchange in the evaporator 14. The air passing through the evaporator 14 is inside air inside the passenger compartment of the vehicle and/or outside air outside the compartment, which is introduced through an inlet 24 into the ventilation duct 16 and flowed toward the evaporator 14 by means of the blower 18.

The air cooled is blown out into the compartment, as conditioned air, through at least one of DEF-side, VENT-side and FOOT-side outlets 26, 27 and 28, and cools the compartment.

The refrigerant evaporated into a gas state within the evaporator 14 returns to the compressor 6, and is again compressed by the compressor 6 and circulates as described above.

In the present embodiment, in addition to an ECU (electronic control unit) 50 for the engine, an ECU 60 for air-conditioning is provided in the compartment. The ECUs 50, 60 each comprise an input-output device, memory (ROM, RAM, BURAM, etc.) for storing control programs, control maps, etc., a central processing unit (CPU), a timer counter, etc., although not shown in the drawings.

To the input of the ECU 50, sensors, such as a rotation speed sensor 38 for detecting engine rotation speed Ne, a water temperature sensor 40 for detecting engine coolant temperature Tw, an accelerator depression sensor 42 for detecting accelerator depression quantity Da, i.e., the amount of depression of an accelerator pedal (not shown) given by the driver, and a vehicle speed sensor 44 for detecting vehicle speed V, are electrically connected. Sensor signals from these sensors 38 to 44 are transmitted from the ECU 50 to the ECU 60, through a CAN (Controller Area Network).

To the input of the ECU 60, sensors, such as a temperature sensor 30 for detecting temperature of the evaporator 14, specifically, the temperature of the exit air at the evaporator 14, which will be referred to as exit air temperature Te_a, a temperature sensor 32 for detecting outside air temperature Tamb, a temperature sensor 34 for detecting the temperature of air in the compartment, which will be referred to as compartment temperature Tr, and a solar radiation sensor 36 for detecting solar radiation quantity Sun, are electrically connected. To the output of the ECU 60, the electromagnetic clutch 7 of the compressor 6 and an amplifier 20 for the motor 19 are electrically connected.

The ECU 60 has a function of varying the amount of the refrigerant discharged from the compressor 6, during vehicle acceleration. Specifically, the ECU 60 supplies a capacity control signal I to the compressor 6. The capacity control signal I controls the amount of the refrigerant discharged from the compressor 6 so that the intake pressure at which the compressor 6 sucks in the refrigerant will become equal to a target value. As a result of this control, the cooling performance of the refrigeration circuit 4 is determined.

Next, the function of the ECU 60 will be described in detail.

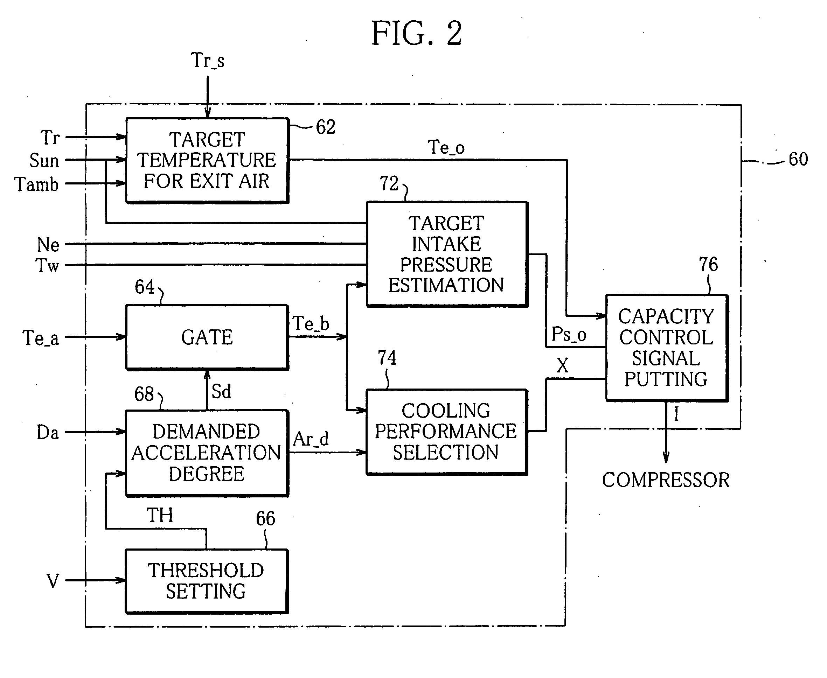

As shown in FIG. 2, the ECU 60 includes a determination section 62 for determining target temperature for exit air, i.e., air after passing through the evaporator 14. To the determination section 62, preset temperature Tr_for air conditioning of the compartment, compartment temperature Tr, outside air temperature Tamb and solar radiation quantity Sun are supplied, and the determination section 62 determines target air temperature Te_o on the basis of these quantities supplied. The target air temperature Te_o determined is supplied from the determination section 62 to an output section 76 for the capacity control signal I.

The preset temperature Tr_s is stored in the memory of the ECU 60. In addition to the preset temperature Tr_s, the memory also stores a preset value "BLV" for the blower 18, a preset value "Intake" which determines a ratio between inside air and outside air for the air passing through the evaporator 14, a preset value "Mode" for setting a mode for selecting an outlet through which conditioned air should be blown out, etc. These preset values are set by operating setting switches on a dashboard in the compartment.

The ECU 60 includes a gate section 64. To the gate section 64, exit air temperature Te_a is supplied from the temperature sensor 30. The gate section 64 is caused to open temporarily at the time the vehicle acceleration starts, and sends out an exit air temperature Te_a as an exit air temperature Te_b at the acceleration start time. The exit air temperature Te_b is supplied from the gate section 64 to an estimation section 72 for target intake pressure of the refrigerant and a selection section 74 for cooling performance. The opening and closing of the gate section 64 will be described later.

The estimation section 72 estimates target intake pressure Ps_o of the refrigerant, which is the intake pressure of the compressor 6 at the acceleration start time, from the exit air temperature Te_b, and supplies it to the output section 76. It is to be noted that the estimation section 72 may estimate the target intake pressure Ps_o, taking account of parameters such as the outside air temperature Tamb, the rotation speed of the compressor 6, the engine rotation speed Ne, the engine coolant temperature Tw, etc., in addition to the exit air temperature Te_b. In that case, the accuracy of estimation of the target intake pressure Ps_o is extremely high. Further, in place of estimating the target intake pressure Ps_o, if an intake pressure sensor for detecting the intake pressure at which the refrigerant is taken into the compressor 6 is provided to the compressor 6, the intake pressure detected by the intake pressure sensor at the time the vehicle acceleration starts can be used as the target intake pressure Ps_o.

The ECU 60 further includes a threshold setting section 66, and vehicle speed V is supplied to the setting section 66. On the basis of the vehicle speed V, the setting section 66 sets a threshold TH for accelerator depression quantity Da, for use in determining whether or not vehicle acceleration has started. The threshold TH and the accelerator depression quantity Da are supplied to a calculation section 68 for demanded acceleration degree.

On the basis of the accelerator depression quantity Da and the threshold TH, the calculation section 68 calculates demanded acceleration degree Ar_d of the vehicle by the driver, and supplies it to the selection section 74. It is to be noted that the demanded acceleration degree Ar_d may be calculated by using, in place of the accelerator depression quantity Da, a physical quantity correlating with the accelerator depression quantity Da, such as the opening of the throttle valve disposed in the intake passage of the engine.

The selection section 74 first calculates post-acceleration cooling performance Qpost of the refrigeration circuit 4, which is estimated in consideration of vehicle acceleration, on the basis of the demanded acceleration degree Ar_d and the exit air temperature Te_b at the acceleration start time of the vehicle, and then calculates a difference ΔQ between this post-acceleration cooling performance Qpost and pre-acceleration cooling performance Qpre, i.e., the cooling performance at the acceleration start time, according to the equation:

$$\Delta Q = Qpost - Qpre$$

Then, taking account of the influence which the difference $\Delta Q$ has on the acceleration performance of the vehicle and the compartment temperature Tr comfortable to the vehicle occupant(s), the selection section 74 selects a cooling performance control mode X and transmits the selected control mode X to the output section 76.

When the vehicle is in a traveling state other than acceleration, the output section 76 calculates a capacity control signal In_a on the basis of the target air temperature Te_o supplied from the determination section 62, and supplies a capacity control signal I set to the capacity control signal In_a, to the compressor 6.

Meanwhile, when the vehicle is under acceleration, the output section 76 calculates a capacity control signal Ia that determines acceleration-period cooling performance of the refrigeration circuit, on the basis of a basic capacity control signal Io calculated on the basis of the target intake pressure Ps_o and the control mode X selected by the selection section 74, and supplies a capacity control signal I set to the capacity control signal Ia, to the compressor 6.

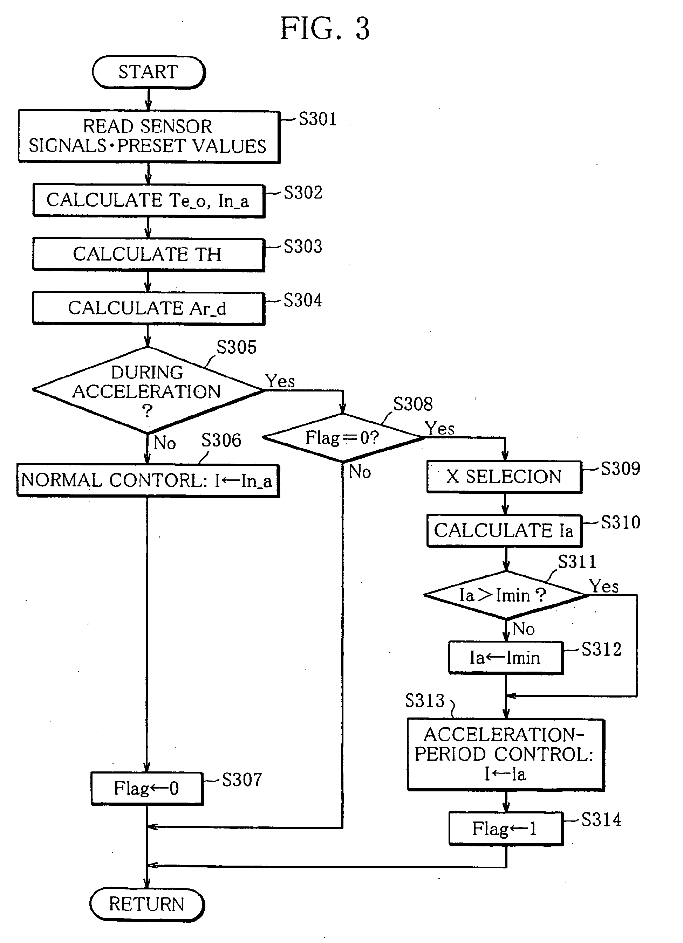

FIG. 3 shows a control flow chart executed by the ECU 60.

First, at step S301, detection signals from the above-mentioned sensors and preset values stored in the memory are read. Then at step S302, the target air temperature Te_ o (determination section 62) and the capacity control signal In_a (output section 76) are calculated by the equations below:

$$Te\_o = f(Tr\_s, \ Tr, \ Tamb, \ Sun)$$

$$In\_a = f(Te\_o)$$

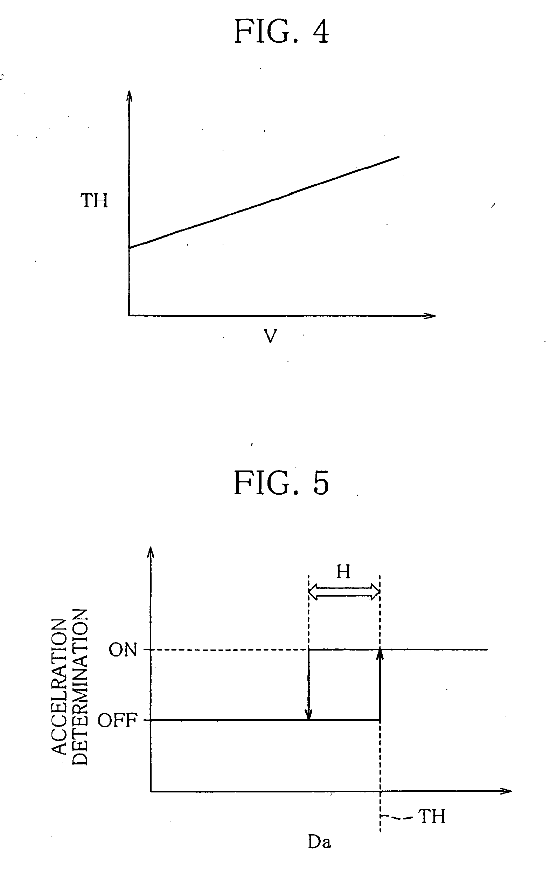

Then, at step S303, the threshold TH for use in determining whether or not the vehicle acceleration is starting is set (setting section 66). Specifically, suppose that the vehicle is traveling at a fixed vehicle speed V, the higher vehicle speed V, the greater accelerator depression Da the driver gives. Thus, the threshold TH needs to be set to a greater value for a higher vehicle speed V, as shown in FIG. 4. Thus, at step S303, the threshold TH corresponding to the vehicle speed V is set from the map of FIG. 4.

Next at step S304, the demanded acceleration degree Ar d is calculated (calculation section 68) according to the equation:

$$Ar\_d = Da - TH$$

Then at step S305, whether or not the vehicle is under acceleration is determined. Specifically, as shown in FIG. 5, just now the accelerator depression quantity Da reaches the threshold TH or just after the accelerator depression quantity Da exceeds the threshold TH, the determination at step S305 changes to Yes, that is, the acceleration determination changes from "OFF" to "ON". At this time, the calculation section 68 supplies an open signal Sd to the gate section 64 (see FIG. 2), thereby causing the gate section 64 to open temporarily as mentioned above.

It is to be noted that when the accelerator depression quantity Da decreases from the threshold TH or above, the acceleration determination changes from "ON" to "OFF" at the time the accelerator depression quantity Da becomes a specified amount H smaller than the threshold TH. The acceleration determination map thus includes a hysteresis loop to prevent hunting in acceleration determination.

When the determination at step S305 is No, next step S306 is executed, where the capacity control signal I is set to the capacity control signal In_a and supplied to the compressor 6 (output section 76). Then at step S307, "0" is set in a flag, and then step S301 and the succeeding steps are repeated.

When the determination at step S305 is Yes, i.e., it is determined that the vehicle is under acceleration, step S308 is executed, where whether or not the flag is "0" is determined.

When this is the first time that the determination at step S308 is carried out after executing of step S307, or in other words, when it is immediately after the vehicle has transferred from a non-acceleration state to an acceleration state, the determination at step S308 is Yes, so that step S309 is executed next. If the determination at step S308 is No, step S301 and the succeeding steps are repeated.

At step S309, the ECU 60 selects a control mode X (selection section 74).

Specifically, first, the post-acceleration cooling performance Qpost and the pre-acceleration cooling performance Qpre are calculated according to the equations below:

$$\texttt{Qpost = f(Te\_b, Ar\_d)}$$

$$\texttt{Qpre = f(Te\_b)}$$

Then, a difference between the post-acceleration cooling performance Qpost and the pre-acceleration cooling performance Qpre, i.e., ΔQ(= Qpost - Qpre) is calculated, and then, on the basis of the difference ΔQ, the cooling performance that the refrigerant circuit should attain during the vehicle acceleration, that is, a control mode X for controlling the cooling performance during the acceleration period, is selected.

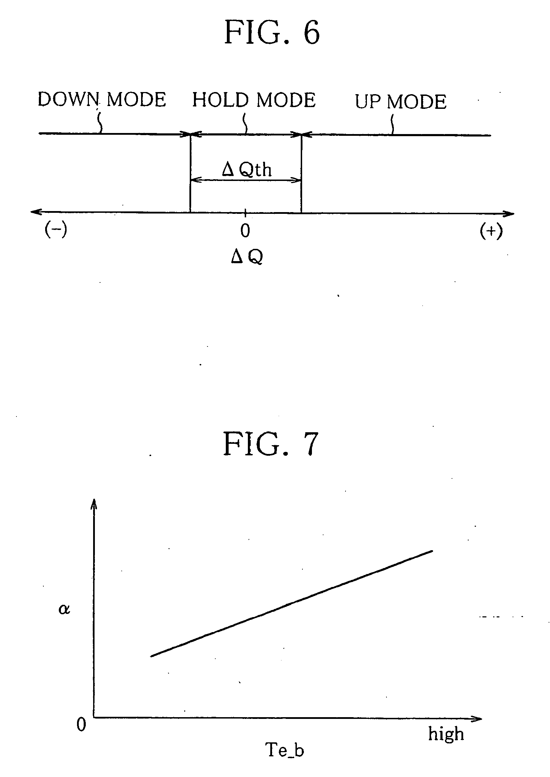

Specifically, as shown in FIG. 6, when the absolute value of the difference ΔQ is less than or equal to a specified value ΔQth, HOLD mode is selected as a control mode X. The situation in which the HOLD mode is selected is that the difference ΔQ does not have a significant influence on the acceleration performance of the vehicle or the compartment temperature Tr comfortable to the vehicle occupant(s).

When the difference ΔQ is positive and its absolute value is greater than the specified value ΔQth, UP mode is selected as a control mode X, and when the difference ΔQ is negative and its absolute value is greater than the specified value ΔQth, DOWN mode is selected as a control mode X. The situation in which the UP mode or DOWN mode is selected is that the difference ΔQ has a significant influence on the acceleration performance of the vehicle or the compartment temperature Tr comfortable to the vehicle occupant (s).

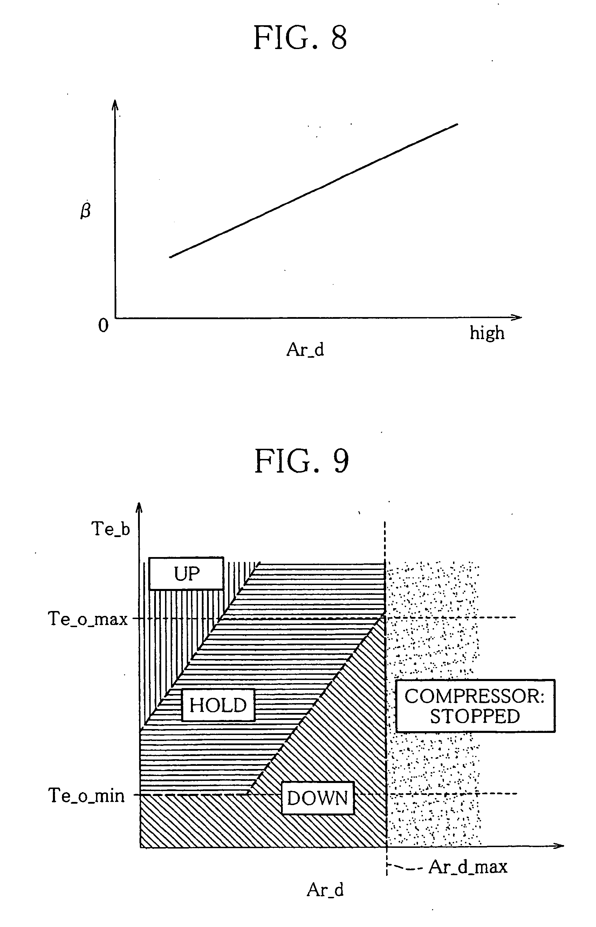

Further, when the UP mode or DOWN mode is selected, mode strength parameter α or β is set. Specifically, when the UP mode is selected, parameter α (>0) is set on the basis of the exit air temperature Te_b, where the parameter α is set to a greater value for a higher exit air temperature Te_b, as shown in FIG. 7. Meanwhile, when the DOWN mode is selected, parameter β (>0) is set on the basis of the demanded acceleration degree Ar_d, where the parameter β is set to a greater value for a higher demanded acceleration level Ar_d, as shown in FIG. 8.

FIG. 9 shows an example of how the HOLD, UP and DOWN modes are distributed, with respect to the demanded acceleration degree Ar_d and the exit air temperature Te_b.

In FIG. 9, specified temperatures Te_o_max and Te_o_ min are maximum and minimum values for the above-mentioned preset temperature Tr_s, i.e., the temperature preset for air conditioning of the compartment. It is to be noted that when the demanded acceleration degree Ar_d exceeds a maximum allowable value Ar_d_max, the air-conditioning system is stopped, and therefore the driving of the compressor 6 is stopped.

The situation in which the demanded acceleration degree Ar_d exceeds the maximum allowable value Ar_d_ max is an emergency in which an extremely great vehicle acceleration is demanded by the driver. In such emergency, the engine output is allocated concentratedly for vehicle acceleration, to further increase the acceleration performance of the vehicle. It is to be noted that in the present embodiment, the compressor 6 is stopped by disengaging the electromagnetic clutch 7. However, when the compressor 6 is not provided with the electromagnetic clutch 7, the capacity control signal I indicative of discharge quantity 0 is supplied to the compressor 6.

After a control mode X is selected as described above, step S310 is executed, where the capacity control signal Ia that determines the acceleration-period cooling performance of the refrigeration circuit is calculated (output section 76).

Specifically, first, a basic capacity control signal Io is calculated according to the equation involving the target intake pressure Ps_o as a parameter:

$$\texttt{Io = f(Ps\_o)}$$

When the control mode X selected by the selection section 74 is the HOLD mode, the capacity control value Ia is obtained by the following equation:

$$\texttt{Ia = Io}$$

Meanwhile, when the control mode X selected is the UP mode or the DOWN mode, the capacity control signal Ia is obtained by one of the following equations:

$$Ia = Io + \alpha$$

$$Ia = Io - \beta$$

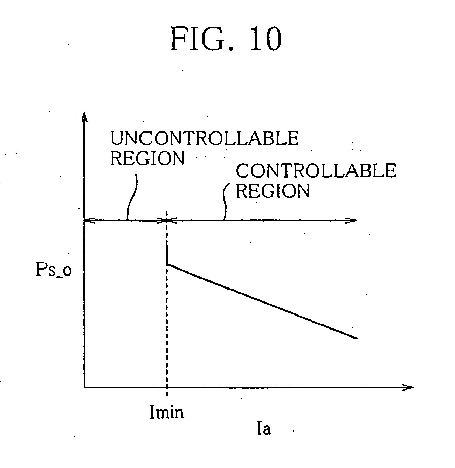

Then, at step S311, whether or not the capacity control signal Ia is greater than or equal to a minimum value needed for the refrigeration circuit during acceleration is determined. When the result of the determination is Yes, i.e., it is determined that the capacity control signal Ia is within a controllable region as shown in FIG. 10, step S313 is executed, where the capacity control signal I is set to the capacity control signal Ia, as shown by the following equation:

$$I = Ia$$

Meanwhile, when the result of the determination at step S311 is No, i.e., it is determined that the capacity control signal Ia is smaller than the minimum value Imin, step S312 is executed, where the capacity control signal Ia is replaced by the minimum value Imin, as shown by the equation below, and then step S313 is executed.

$$Ia = Imin$$

After the capacity control signal I is determined in the above described manner, the capacity control signal I is supplied from the output section 76 to the compressor 6. Thus, the compressor 6 discharges the refrigerant of the amount corresponding to the capacity control signal I to the circulation path of the refrigeration circuit 4. Consequently, the intake pressure Ps at which the compressor 6 sucks in the refrigerant is controlled to the desired value. Then, at step S314, "1" is set into the flag, and then step S301 and the succeeding steps are repeated.

Once step S314 is executed, the result of the determination at step S308 is No when step S308 is executed in the next cycle. Thus, as long as the vehicle stays under acceleration, step S309 and the succeeding steps are not executed again. Thus, during vehicle acceleration, the capacity control signal Ia is not replaced by a new capacity control signal. Even if the amount Da of accelerator depression given by the driver slightly varies, such slight variation does not affect the capacity control signal Ia.

As clear from the above explanation, in the air-conditioning system according to the present invention, the drive power supplied to the compressor 6 is decreased during vehicle acceleration, but in that case, the decreasing rate of the drive power supplied to the compressor 6 is determined taking account of the degree of vehicle acceleration demanded or the accelerator depression quantity Da.

Specifically, in the above-described embodiment of the air-conditioning system, the selection section 74 selects a control mode X for controlling the acceleration-period cooling performance, on the basis of the demanded acceleration degree Ar_d and the exit air temperature Te_b. As control modes X, three modes, namely the HOLD, UP and DOWN modes are provided, so that the cooling performance is prevented from being always decreased during the vehicle acceleration, compared with the acceleration start time. Thus, it is possible to ensure the acceleration performance of the vehicle and at the same time maintain the compartment temperature Tr comfortable to the vehicle occupant(s).

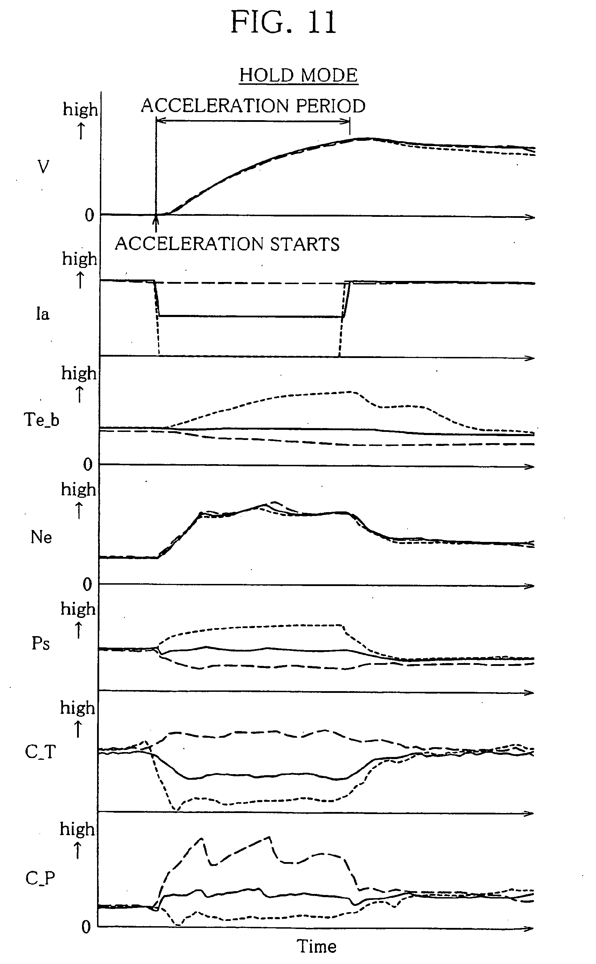

More specifically, when the absolute value of the difference ΔQ is less than or equal to the specified value ΔQth, i.e., when the difference ΔQ does not have a significant influence on the acceleration performance of the vehicle or the compartment temperature Tr comfortable to the vehicle occupant(s), the selection section 74 selects the HOLD mode as a control mode X. In this case, during vehicle acceleration, the drive power C_P supplied to the compressor 6 varies as shown in solid line in FIG. 11. It is to be noted that C_T in FIG. 11 denotes the torque exerted on the compressor 6.

In the HOLD mode, the capacity control signal Ia or the basic capacity control signal Io is calculated on the basis of the target intake pressure Ps_o before acceleration of the vehicle. Thus, even when the engine rotation speed Ne increases, the drive power C_P supplied to the compressor 6 does not greatly increase, in other words, an increase in drive power C_P is kept at a low level. Thus, the vehicle acceleration performance does not suffer a significant decrease and therefore is ensured. This means that the air-conditioning system has an improved reliability.

Further, during vehicle acceleration, the situation where the drive power C_P supplied to the compressor 6 is not decreased as shown in dotted line in FIG. 11, to allocate the power corresponding to the decrease in drive power C_P for vehicle acceleration does not occurs. Thus, during vehicle acceleration, the exit air temperature Te_b and the intake pressure Ps hardly vary as shown in solid line in FIG. 11. This ensures that the comfortable compartment temperature Tr is maintained during vehicle acceleration.

To the contrary, if the drive power C_P supplied to the compressor 6 is decreased during vehicle acceleration, the exit air temperature Te_b and the intake pressure Ps greatly increase as shown in dotted line in FIG. 11, so that the comfortable compartment temperature Tr cannot be maintained. This always happens as long as the drive power C_P supplied to the compressor 6 is decreased.

Meanwhile, when the selection section 74 selects the UP mode or the DOWN mode as a control mode X, the capacity control signal Ia is determined by adding the parameter α to the basic capacity control signal Io or subtracting the parameter β from the basic capacity control signal Io, as mentioned above. This means that the acceleration-period cooling performance determined by the capacity control signal Ia is calculated by taking account of the exit air temperature Te_b or the demanded acceleration degree Ar_d in addition to the pre-acceleration cooling performance Qpre.

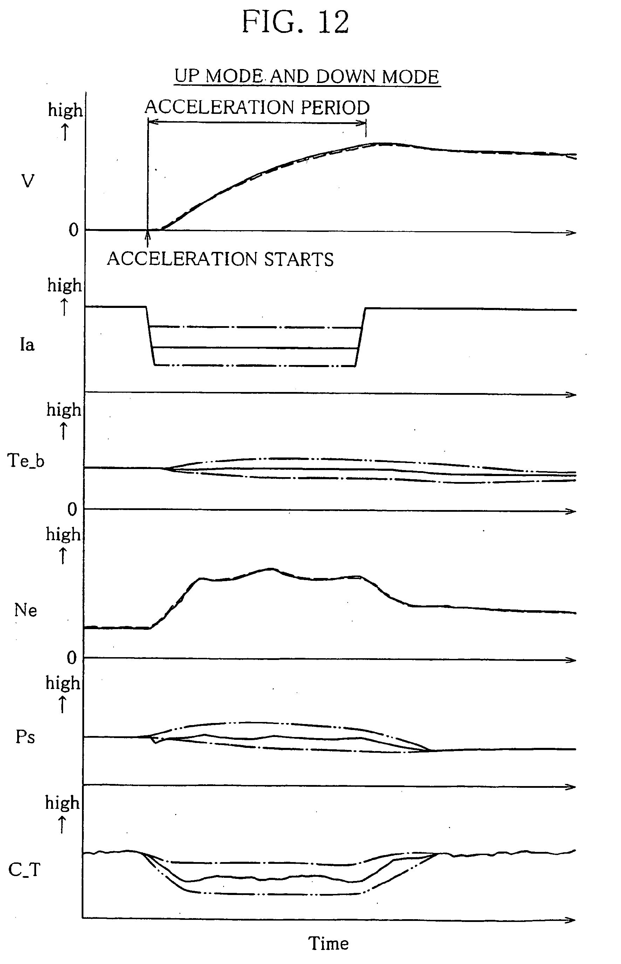

Specifically, when the UP mode is selected as a control mode X, the capacity control signal Ia is set to the basic capacity control signal Io plus parameter α, so that, the exit air temperature Te_b and the intake pressure Ps are decreased during vehicle acceleration, compared with the acceleration start time, as shown in one-dot chain line in FIG. 12. Consequently, the temperature of the conditioned air blown out into the compartment is more decreased.

When the DOWN mode is selected as a control mode X, the capacity control signal Ia is set to the basic capacity control signal Io minus parameter β, so that the torque C_T exerted on the compressor 6 is greatly decreased during vehicle acceleration as shown in two-dot chain line in FIG. 12. Consequently, the vehicle acceleration performance increases.

It is to be noted that the curves shown in solid line in FIG. 12 relate to the case where the HOLD mode is selected as a control mode X.

The present invention is not limited to the above-described embodiment, but may be modified in various ways.

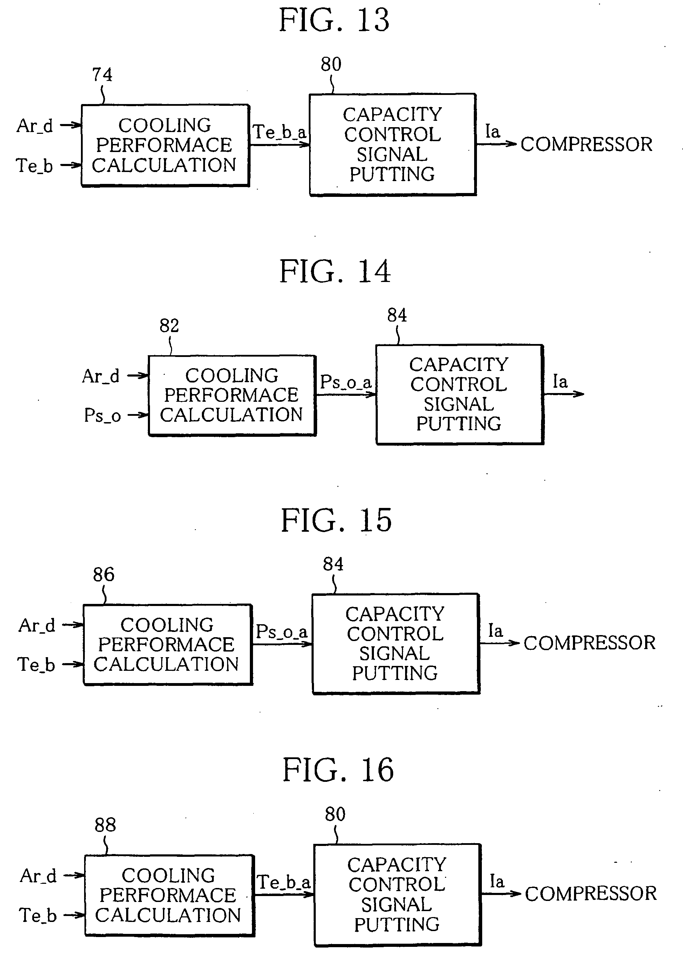

For example, as shown in FIG. 13, in place of the estimation section 72 and the selection section 74, one calculation section 78 can be used. The calculation section 78 calculates acceleration-period target air temperature Te_b_a, on the basis of the exit air temperature Te_b and the demanded acceleration degree Ar_d, and supplies it to the output section 80. In this case, the output section directly calculates the capacity control signal Ia from the acceleration-period target air temperature Te_b_a, by the following equation:

$$\mathtt{Ia \ = \ f(Te\_b\_a)}$$

Further, as seen from FIG. 14, a calculation section 82 can be used in place of the selection section 74. The calculation section 82 calculates acceleration-period target intake pressure Ps_o_a, on the basis of the target intake pressure Ps_o estimated by the estimation section 72 and the demanded acceleration degree Ar_d, and supplies it to an output section 84. In this case, the output section 84 directly calculates the capacity control signal Ia from the acceleration-period target intake pressure Ps_o_a by the following equation:

$$\mathtt{Ia \ = \ f(Ps\_o\_a)}$$

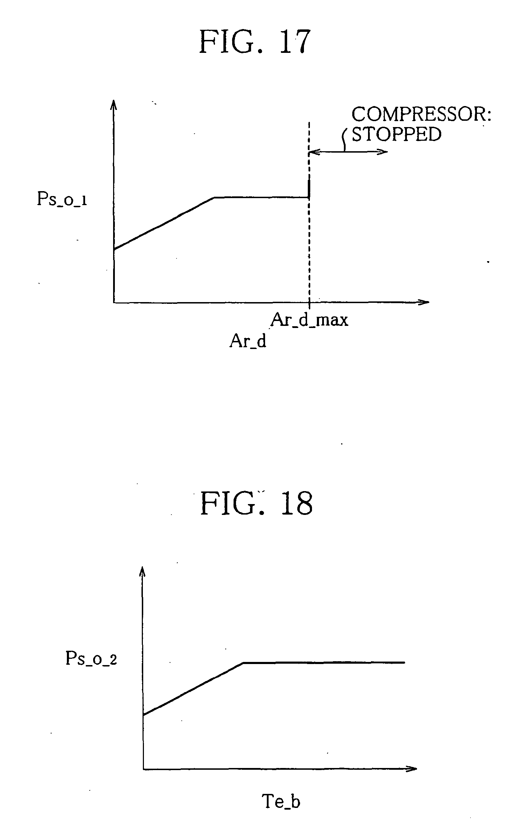

Further, the calculation section 78 can be replaced by a calculation section 86 in FIG. 15 or a calculation section 88 in FIG. 16. The calculation section 86 includes maps shown in FIG. 17 and 18. The map in FIG. 17 defines relation between demanded acceleration degree Ar_d and acceleration-period target intake pressure Ps_o_1, while the map in FIG. 18 defines relation between exit air temperature Te_b and acceleration-period target intake pressure Ps_o_2.

The calculation section 86 reads the target intake pressures Ps_o_1 and Ps_o_2 corresponding to the demanded acceleration degree Ar_d and the exit air temperature Te_b, respectively, and supplies a greater one of the two target intake pressures Ps_o_1 and Ps_o_2 to the output section 84, for use as a target intake pressure Ps_o_a.

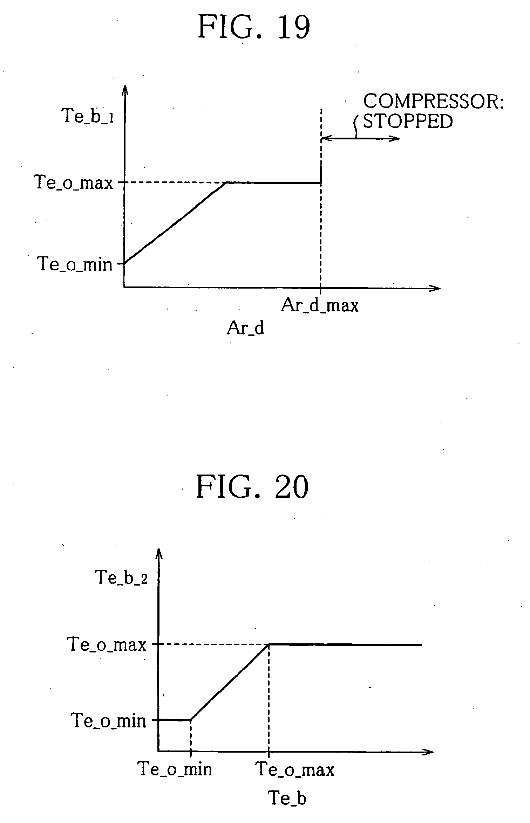

Meanwhile, the calculation section 88 includes maps shown in FIG. 19 and 20. The map in FIG. 19 defines relation between demanded acceleration degree Ar_d and acceleration-period target air temperature Te_b_1, while the map in FIG. 20 defines relation between exit air temperature Te_b and acceleration-period target air temperature Te_b_2.

The calculation section 88 reads the target air temperatures Te_b_1 and Te_b_2 corresponding to the demanded acceleration degree Ar_d and the exit air temperature Te_b, respectively, and supplies a greater one of the two target air temperatures Te_b_1 and Te_b_2 to the output section 80, for use as the target intake pressure Te b_a.

With the calculation section and output section of the types shown in FIGS. 13 to 16, it is possible to ensure the vehicle acceleration performance and at the same time maintain the comfortable compartment temperature Tr, during vehicle acceleration.

Although the control flow chart of FIG. 3 includes steps S307, S308 and S314 for setting the flag, these steps S307, S308 and S314 can be omitted. In that case, the capacity control signal Ia is allowed to be replaced by a new capacity control signal during vehicle acceleration.

The temperature sensor 30 may be provided to detect the exit-side surface temperature of the evaporator 14, in place of detecting the exit air temperature Te_a, i.e., the temperature of air at the exit of the evaporator 14 after passing through the evaporator 14. Further, the accelerator depression quantity Da can be used in place of the demanded acceleration degree Ar_d.

**Claims**

1. An air-conditioning system for a vehicle, comprising a refrigeration circuit (4) including a circulation path along which a refrigerant circulates, the refrigeration circuit (4) having a variable capacity compressor (6), a condenser (8), an expansion mechanism (12) and an evaporator (14) disposed in the circulation path in this order;
a degree detection device (68) for detecting demanded vehicle-acceleration degree (Ar_d);
a temperature detection device (30) for detecting temperature (Te_b) of the evaporator (14) or temperature correlating with the temperature of the evaporator (14), at vehicle-acceleration start time; and
a selection device (74, 78, 82, 86, 88) for selecting acceleration-period cooling performance of said refrigeration circuit (4), on the basis of the demanded acceleration degree (Ar_d) and the temperature (Te_b) detected; and
an output device (76, 80, 84) for generating a capacity control signal (I) for determining an amount of the refrigerant discharged from the compressor (6), on the basis of the acceleration-period cooling performance selected, and outputting the capacity control signal (I) to the compressor (6), **characterized in that**
said selection device (74) comprises control modes for controlling the acceleration-period cooling performance of the refrigeration circuit (4), where selection from the control modes is performed on the basis of a difference (ΔQ) between pre-acceleration cooling performance (Qpre) of the refrigeration circuit (4) at the acceleration start time and post-acceleration cooling performance (Qpost) of the refrigeration circuit (4) estimated in consideration of vehicle acceleration.

2. The system according to claim 1, **characterized in that**
the control modes include a HOLD mode to be selected when said difference (ΔQ) is within a specified range (ΔQth), for maintaining the acceleration-period cooling performance at the same level as the pre-acceleration cooling performance (Qpre).

3. The system according to claim 1 or 2, **characterized in that**
the control modes include at least one of an UP mode and a DOWN mode to be selected when said difference (ΔQ) is out of a specified range (ΔQth); wherein
the UP mode maintains the acceleration-period cooling performance at a higher level compared with the pre-acceleration cooling performance (Qpre), and the DOWN mode maintains the acceleration-period cooling performance at a lower level compared with the pre-acceleration cooling performance (Qpre).

4. The system according to claim 3, **characterized in that**
the UP mode is provided to cause the acceleration- period cooling performance to increase with an increase in the temperature (Te_b) detected.

5. The system according to claim 3 or 4, **characterized in that**
the DOWN mode is provided to cause the acceleration-period cooling performance to decrease with an increase in the demanded acceleration degree (Ar_d).

6. The system according to any of claims 1 to 5, **characterized in that**
said selection device (78, 88) calculates an acceleration-period target temperature (Te_b_a) for the evaporator (14), on the basis of the demanded acceleration degree (Ar_d) and the temperature (Te_b) detected, and set the acceleration-period cooling performance on the basis of the acceleration-period target temperature (Te_b_a).

7. The system according to claim 6, **characterized in that**
the acceleration-period target temperature (Te_b_a) is a target temperature for exit air having passed through the evaporator (14).

8. The system according to one of claims 1 to 7, **characterized in that**
said selection device (82, 86) calculates an acceleration-period target pressure (Ps_o_a) for the compressor (6), on the basis of the demanded acceleration degree (Ar_d) and the temperature (Te_b) detected, and sets the acceleration-period target pressure (Ps_o_a).

9. The system according to claim 8, wherein
the acceleration-period target pressure (Ps_o_a) is a target intake pressure at which the compressor (6) should suck in the refrigerant.

**Patentansprüche**

1. Klimaanlagensystem für ein Fahrzeug, das einen Kühlkreis (4) aufweist, der einen Umlaufpfad beinhaltet, entlang dem ein Kältemittel zirkuliert, wobei der Kühlkreis (4) einen verstellbaren Kompressor (6), einen Kondensator (8), einen Expansionsmechanismus (12) und einen Verdampfer (14) aufweist, die in dieser Reihenfolge im Umlaufpfad angeordnet sind;
eine Graderfassungsvorrichtung (68) zum Erfassen eines geforderten Fahrzeug-Beschleunigungsgrades (Ar_d);
eine Temperaturerfassungsvorrichtung (30) zum Erfassen einer Temperatur (Te_b) des Verdampfers (14) oder einer Temperatur, die mit der Temperatur des Verdampfers (14) korreliert, zum Zeitpunkt der Fahrzeugbeschleunigung; und
eine Auswahlvorrichtung (74, 78, 82, 86, 88) zum Auswählen einer Kühlleistung des Kühlkreises (4) während des Beschleunigszeitraumes auf der Basis des geforderten Beschleunigungsgrades (Ar_d) und der erfassten Temperatur (Te_b); und
eine Ausgabevorrichtung (76, 80, 84) zum Erzeugen eines Kapazitäts-Steuersignals (I) zum Ermitteln einer Kältemittelmenge, die aus dem Kompressor (6) ausgestoßen wird, auf der Basis der ausgewählten Kühlleistung während des Beschleunigungszeitraumes, und zum Ausgeben des Kapazitäts-Steuersignals (I) an den Kompressor (6), **dadurch gekennzeichnet, dass**
die Auswahlvorrichtung (74) Steuermodi zum Steuern der Kühlleistung des Kühlkreises (4) während des Beschleunigungszeitraumes aufweisen, wo die Auswahl der Steuermodi auf der Basis einer Differenz (ΔQ) zwischen einer Kühlleistung (Qpre) des Kühlkreises (4) während der Vorbeschleunigung zum Startzeitpunkt der Beschleunigung und einer Kühlleistung (Qpost) des Kühlkreises (4) während der Nachbeschleunigung durchgeführt wird, die unter Berücksichtigung der Fahrzeugbeschleunigung abgeschätzt wird.

2. System nach Anspruch 1, **dadurch gekennzeichnet, dass** die Steuermodi einen auszuwählenden HOLD-Modus zum Halten der Beschleunigungszeitraum-Kühlleistung auf dem gleichen Level wie die Kühlleistung (Qpre) während der Vorbeschleunigung beinhalten, wenn sich die Differenz (ΔQ) innerhalb eines speziellen Bereichs (ΔQth) befindet.

3. System nach Anspruch 1 oder 2, **dadurch gekennzeichnet, dass** die Steuermodi zumindest einen der auszuwählenden Modi UP-Modus oder DOWN-Modus beinhalten, wenn sich die Differenz (ΔQ) außerhalb eines speziellen Bereichs (ΔQth) befindet, wobei der UP-Modus die Beschleunigungszeitraum-Kühlleistung verglichen mit der Kühlleistung (Qpre) während der Vorbeschleunigung auf einem höheren Niveau hält, und wobei der DOWN-Modus die Beschleunigungszeitraum-Kühlleistung verglichen mit der Kühlleistung (Qpre) während der Vorbeschleunigung auf einem niedrigeren Niveau hält.

4. System nach Anspruch 3, **dadurch gekennzeichnet, dass** der UP-Modus vorgesehen ist, um ein Ansteigen der Beschleunigungszeitraum-Kühlleistung mit einem Anstieg der erfassten Temperatur (Te_b) zu bewirken.

5. System nach Anspruch 3 oder 4, **dadurch gekennzeichnet, dass** der DOWN-Modus vorgesehen ist, um ein Abnehmen der Beschleunigungszeitraum-Kühlleistung mit einem Anstieg des geforderten Beschleunigungsgrades (Ar_d) zu bewirken.

6. System nach einem der Ansprüche 1 bis 5, **dadurch gekennzeichnet, dass** die Auswahlvorrichtung (78, 88) auf der Basis des geforderten Beschleunigungsgrades (Ar_d) und der erfassten Temperatur (Te_b) eine Beschleunigungszeitraum-Solltemperatur (Te_b_a) für den Verdampfer (14) berechnet und die Beschleunigungszeitraum-Kühlleistung auf der Basis der Beschleunigungszeitraum-Solltemperatur (Te_b_a) einstellt.

7. System nach Anspruch 6, **dadurch gekennzeichnet, dass** die Beschleunigungszeitraum-Solltemperatur (Te_b_a) eine Solltemperatur für Auslassluft ist, die durch den Verdampfer (14) gegangen ist.

8. System nach einem der Ansprüche 1 bis 7, **dadurch gekennzeichnet, dass** die Auswahlvorrichtung (82, 86) auf der Basis des geforderten Beschleunigungsgrades (Ar_d) und der erfassten Temperatur (Te_b) einen Beschleunigungszeitraum-Solldruck (Ps_o_a) für den Kompressor (6) berechnet, und den Beschleunigungszeitraum-Solldruck (Ps_o_a) einstellt.

9. System nach Anspruch 8, wobei der Beschleunigungszeitraum-Solldruck (Ps_o_a) ein Sollansaugdruck ist, bei dem der Kompressor (6) das Kältemittel ansaugen soll.

**Revendications**

1. Système de conditionnement d'air de véhicule comprenant :

   - un circuit de réfrigération (4) ayant un chemin de circulation de réfrigérant avec un compresseur (6) de capacité variable, un condenseur (8), un moyen d'expansion (12) et un évaporateur (14) dans cet ordre dans le chemin de circulation,
   - un dispositif de détection de degré (68) pour détecter le degré d'accélération du véhicule, demandé (Ar_d),
   - un dispositif de détection de température (30) pour détecter la température (Te_b) de l'évaporateur (14) ou une température liée à la température de l'évaporateur (14) au moment du démarrage de l'accélération du véhicule, et
   - un dispositif de sélection (74, 78, 82, 86, 88) pour sélectionner la performance de refroidissement pour la période d'accélération du circuit réfrigérant (4) en fonction du degré d'accélération (Ar_d) demandé ou de la température (Te_b) détectée, et
   - un dispositif de sortie (76, 80, 84) pour générer un signal de contrôle de capacité (I) pour déterminer la quantité de réfrigérant fournie par le compresseur (6) en fonction de la performance de refroidissement de période d'accélération choisie, et fournir en sortie le signal de contrôle de capacité (I) au compresseur (6),

   **caractérisé en ce que**
   le dispositif de sélection (74) comporte des modes de contrôle pour contrôler la performance de refroidissement en période d'accélération du circuit réfrigérant (4), selon lequel la sélection des modes de contrôle se fait sur le fondement d'une différence (ΔQ) entre la performance (Qpre) de refroidissement de pré-accélération du circuit de réfrigération (4) à l'instant du début de l'accélération et une performance (Qpost) de refroidissement poste-accélération du circuit réfrigérant (4), évaluée en tenant compte de l'accélération du véhicule.

2. Système selon la revendication 1,
   **caractérisé en ce que**
   les modes de contrôle comprennent le mode de maintien choisi si la différence (ΔQ) se situe dans une plage définie (ΔQth), pour maintenir la performance de refroidissement en période d'accélération au même niveau que la performance de refroidissement (Qpre) en période de pré-accélération.

3. Système selon la revendication 1 ou 2,
   **caractérisé en ce que**
   les modes de contrôle comprennent au moins l'un des modes d'augmentation et de diminution à choisir lorsque la différence (ΔQ) est en-dehors de la plage définie (ΔQth), et
   le mode d'augmentation maintient la performance de refroidissement de la période d'accélération à un niveau plus élevé comparé à la performance de refroidissement de pré-accélération (Qpre), et
   le mode de diminution maintient la performance de refroidissement de la période d'accélération à un niveau inférieur à celui de la performance de refroidissement de pré-accélération (Qpre).

4. Système selon la revendication 3,
   **caractérisé en ce que**
   le mode d'augmentation produit l'augmentation de la performance de refroidissement en période d'accélération avec une augmentation de la température (Te_b) détectée.

5. Système selon la revendication 3 ou 4,
   **caractérisé en ce que**
   le mode de diminution fait diminuer la performance de refroidissement de la période d'accélération avec la diminution du degré d'accélération demandé (Ar_d).

6. Système selon les revendications 1 à 5,
   **caractérisé en ce que**
   le dispositif de sélection (78, 88) calcule une température de consigne de la période d'accélération (Te_b_a) pour l'évaporateur (14) en fonction du degré d'accélération demandé (Ar_d) et de la température (Te_b) détectée et il fixe les performances de refroidissement de la période d'accélération en fonction de la température de consigne de la période d'accélération (Te_b_a).

7. Système selon la revendication 6,
**caractérisé en ce que**
la température de consigne de la période d'accélération (Te_b_a) est la température de consigne de l'air sortant, ayant traversé l'évaporateur (14).

8. Système selon les revendications 1 à 7,
**caractérisé en ce que**
le dispositif de sélection (82, 86) calcule une pression de consigne de la période d'accélération (Ps_o_a) pour le compresseur (6) en fonction du degré d'accélération demandé (Ar_d) et de la température (Te_b) détectée et il fixe la pression de consigne (Ps_o_a) de la période d'accélération.

9. Système selon la revendication 8,
**caractérisé en ce que**
la pression de consigne de la période d'accélération (Ps_o_a) est la pression d'entrée de consigne à laquelle le compresseur (6) aspire le réfrigérant.

FIG. 1

EP 1 897 712 B1

# FIG. 2

EP 1 897 712 B1

## FIG. 3

START

READ SENSOR SIGNALS·PRESET VALUES —S301

CALCULATE Te_o, In_a —S302

CALCULATE TH —S303

CALCULATE Ar_d —S304

DURING ACCELERATION ? —S305

Yes →

No →

Flag=0? —S308

Yes →

No ↓

NORMAL CONTORL: I←In_a —S306

X SELECION —S309

CALCULATE Ia —S310

Ia>Imin ? —S311

Yes →

No ↓

Ia←Imin —S312

ACCELERATION-PERIOD CONTROL: I←Ia —S313

Flag←0 —S307

Flag←1 —S314

RETURN

# FIG. 4

# FIG. 5

# FIG. 6

DOWN MODE   HOLD MODE   UP MODE

$$\Delta Qth$$

$$(-)\qquad\qquad 0 \qquad\qquad (+)$$

$$\Delta Q$$

# FIG. 7

$\alpha$

$0$

high

Te_b

# FIG. 8

# FIG. 9

# FIG. 10

# FIG. 11

HOLD MODE

ACCELERATION PERIOD

ACCELERATION STARTS

V

Ia

Te_b

Ne

Ps

C_T

C_P

Time

# FIG. 12

UP MODE AND DOWN MODE

ACCELERATION PERIOD

ACCELERATION STARTS

V

Ia

Te_b

Ne

Ps

C_T

Time

# FIG. 13

Ar_d →
Te_b →
**74**
COOLING PERFORMACE CALCULATION
Te_b_a →
**80**
CAPACITY CONTROL SIGNAL PUTTING
Ia → COMPRESSOR

# FIG. 14

Ar_d →
Ps_o →
**82**
COOLING PERFORMACE CALCULATION
Ps_o_a →
**84**
CAPACITY CONTROL SIGNAL PUTTING
Ia →

# FIG. 15

Ar_d →
Te_b →
**86**
COOLING PERFORMACE CALCULATION
Ps_o_a →
**84**
CAPACITY CONTROL SIGNAL PUTTING
Ia → COMPRESSOR

# FIG. 16

Ar_d →
Te_b →
**88**
COOLING PERFORMACE CALCULATION
Te_b_a →
**80**
CAPACITY CONTROL SIGNAL PUTTING
Ia → COMPRESSOR

## FIG. 17

## FIG. 18

# FIG. 19

# FIG. 20

**EP 1 897 712 B1**

**REFERENCES CITED IN THE DESCRIPTION**

**Patent documents cited in the description**

- JP 57175422 A
- EP 1623861 A
- EP 0266208 A
- US 4928499 A